# EUROPEAN PATENT APPLICATION

(11) **EP 3 396 749 A1**
(43) Date of publication of application: **31.10.2018**
(21) Application number: 16878788.5
(22) Date of filing: 21.12.2016
(51) Int. Cl.: H01M 4/62, H01G 11/38, H01G 11/86, H01M 4/04, H01M 4/139

(54) **BINDER FOR BATTERY ELECTRODE, ELECTRODE, AND BATTERY**

(30) Priority: 21.12.2015 JP 2015248314
(71) Applicant: Osaka Soda Co., Ltd., Osaka-shi, Osaka 550-0011 (JP)
(72) Inventor: TAKAHASHI, Kazuhiro, Osaka-shi Osaka 550-0011 (JP); MOROOKA, Yoshihiro, Osaka-shi Osaka 550-0011 (JP); MATSUO, Takashi, Osaka-shi Osaka 550-0011 (JP); UEDA, Hideaki, Osaka-shi Osaka 550-0011 (JP)
(74) Representative: Müller-Boré & Partner Patentanwälte PartG mbB
(86) International application number: PCT/JP2016/088162
(87) International publication number: WO 2017/110901

(57) **Abstract**

Provided is a binder for a battery electrode, the binder having superior binding properties and being capable of effectively decreasing the internal resistance of a battery while still being usable as an aqueous binder with low environmental burden. A binder for a battery electrode according to the present invention has a core shell structure of a core section (A) containing a copolymer the principal constituent of which is methyl methacrylate and a shell section (B) having a (meth)acrylate-based copolymer containing (meth)acrylate as a polymerization component, wherein the swelling ratios with respect to a mixed solvent in which ethylene carbonate and diethyl carbonate are mixed at a volume ratio of 3 : 7 are 10% or less for the resin constituting the core section (A) and 30% or more for the resin constituting the shell section (B).

## Description

The present invention relates to a battery electrode binder, an electrode, and a battery. More specifically, the present invention relates to a battery electrode binder used in a battery electrode, an electrode manufactured using the battery electrode binder, and a battery manufactured using the electrode.

### BACKGROUND ART

It has been known that a binder is used in a battery electrode. A lithium-ion secondary battery is a representative example of a battery that includes an electrode produced using a binder.

Since having high energy density and high voltage, the lithium-ion secondary battery is used for electronic apparatuses such as a mobile phone, a laptop computer, and a camcorder. Recently, because of a rise of consciousness to environmental protection, and enactment of related laws, the lithium-ion secondary battery is being developed for use in vehicles such as an electric vehicle and a hybrid electric vehicle or for application as a home power storage battery.

The lithium-ion secondary battery generally includes an anode, a cathode, a separator, an electrolyte solution, and a current collector. As regards the electrodes, the anode is obtained by applying a coating liquid that contains an anode active material capable of intercalating and deintercalating a lithium ion, such as graphite or hard carbon, an electrically conductive additive, a binder, and a solvent, onto a current collector represented by a copper foil, and drying the coating liquid. Presently, generally used as the binder is one obtained by dispersing a styrene-butadiene rubber (hereinafter, abbreviated as "SBR") in water.

On the other hand, the cathode is manufactured in the same manner as the anode by applying a coating liquid onto a current collector foil represented by an aluminum foil and drying the coating liquid, the coating liquid being obtained by mixing a cathode active material such as layered lithium cobaltate or spinel-type lithium manganate, an electrically conductive additive such as carbon black, and a binder such as polyvinylidene fluoride or polytetrafluoroethylene and dispersing the mixture in a polar solvent such as N-methylpyrrolidone.

These binders for the lithium-ion battery need to be increased in addition amount to secure bonding force, which causes a problem of deteriorating the performance of the battery. In addition, N-methylpyrrolidone is used as a slurry solvent, and therefore an aqueous binder is desired from the viewpoint of recovery, costs, toxicity, and environmental burden. The use of an aqueous SBR-based binder, however, presents a problem that oxidative degradation is caused under a cathode environment. Therefore, used as the binder for the cathode is still conventional polyvinylidene fluoride or polytetrafluoroethylene used together with N-methylpyrrolidone as a dispersing solvent. Thus, urgent development is required for the binder that is excellent in bondability between a current collector and an active material and between active materials, is an aqueous binder with low environmental burden, and is suitable for manufacturing a secondary battery electrode high in oxidation resistance.

Recently, in order to solve the foregoing problems, Patent Documents 1, 2, and 3 have proposed binders containing an acrylic emulsion as an aqueous binder component. The use of these binders for the cathode, however, presents a problem of an increase in interface resistance between an electrode and a current collector and in internal resistance of a battery, causing a concern about deterioration of battery characteristics.

### PRIOR ART DOCUMENTS

### PATENT DOCUMENTS

Patent Document 1: Japanese Patent Laid-open Publication No. 2014-116265
Patent Document 2: Japanese Patent Laid-open Publication No. 2006-260782
Patent Document 3: Japanese Patent Laid-open Publication No. 2014-160638

### SUMMARY OF THE INVENTION

### PROBLEMS TO BE SOLVED BY THE INVENTION

The present invention has been made in view of the above circumstances, and a main object of the present invention is to provide a battery electrode binder that is excellent in bondability and capable of effectively decreasing the internal resistance of a battery while still being usable as an aqueous binder with low environmental burden.

### MEANS FOR SOLVING THE PROBLEMS

The present inventors have conducted studies to achieve the above object. As a result, the present inventors have found that a battery electrode binder is obtained that is excellent in bondability and capable of effectively decreasing the internal resistance of a battery while being still usable as an aqueous binder with low environmental burden, by making the binder have a core-shell structure that includes a core section (A) and a shell section (B), with the core section (A) containing a copolymer that has methyl methacrylate as a main component and the shell section (B) having a (meth)acrylate-based copolymer that contains a (meth)acrylate as a polymerization component, and further by setting swelling rates of a resin constituting the core section (A) and a resin constituting the shell section (B) to 10% or less and 30% or more, respectively, with respect to a mixed solvent having ethylene carbonate and diethyl carbonate mixed therein at a volume ratio of 3 : 7. The present invention has been completed by further conducting studies on the basis of these findings.

That is, the present invention provides the following aspects of the invention.
Item 1. A battery electrode binder having a core-shell structure that includes a core section (A) and a shell section (B), with the core section (A) containing a copolymer that has methyl methacrylate as a main component and the shell section (B) having a (meth)acrylate-based copolymer that contains a (meth)acrylate as a polymerization component,
   a resin constituting the core section (A) and a resin constituting the shell section (B) having swelling rates of 10% or less and 30% or more, respectively, with respect to a mixed solvent having ethylene carbonate and diethyl carbonate mixed therein at a volume ratio of 3 : 7.
Item 2. The battery electrode binder according to item 1, wherein the (meth)acrylate-based copolymer of the shell section (B) contains a polyfunctional (meth)acrylate monomer as the polymerization component.
Item 3. The battery electrode binder according to item 1 or 2, including between the core section (A) and the shell section (B) a portion where the core section (A) is compatible with the shell section (B).
Item 4. The battery electrode binder according to any one of items 1 to 3, wherein the (meth)acrylate-based copolymer of the shell section (B) contains a hydroxy group-containing (meth)acrylic monomer as the polymerization component.
Item 5. The battery electrode binder according to any one of items 2 to 4, wherein the polyfunctional (meth)acrylate monomer is a di- to penta-functional (meth)acrylate.
Item 6. The battery electrode binder according to any one of items 1 to 5, wherein the (meth)acrylate in the (meth)acrylate-based copolymer of the shell section (B) is at least one selected from the group consisting of ethyl acrylate, propyl acrylate, butyl acrylate, 2-ethylhexyl acrylate, and 2-ethylhexyl methacrylate.
Item 7. The battery electrode binder according to item 4, wherein the hydroxy group-containing (meth)acrylate monomer is an alkylene glycol mono(meth)acrylate.
Item 8 The battery electrode binder according to any one of items 1 to 7, being an aqueous emulsion having a particle diameter of 50 to 300 nm.
Item 9. A battery electrode including a current collector and on the current collector a composition containing at least an electrode active material, an electrically conductive additive, and a binder,
   the binder being the battery electrode binder according to any one of items 1 to 8.
Item 10. The battery electrode according to item 9, having a content of the electrically conductive additive of 1 to 20 parts by weight and a content of the binder of 1 to 10 parts by weight, based on 100 parts by weight of the electrode active material.
Item 11. A method of manufacturing a battery electrode, the method comprising the steps of:
   dispersing an electrode active material and an electrically conductive additive in an aqueous solvent to give a dispersion;
   further dispersing in the dispersion an aqueous binder containing the battery electrode binder according to any one of items 1 to 8 to give a slurry solution; and
   applying the obtained slurry solution onto a current collector and drying the slurry solution.
Item 12. A battery including the battery electrode according to item 9 or 10.

### EFFECTS OF THE INVENTION

According to the present invention, it is possible to provide a battery electrode binder that is excellent in bondability and capable of effectively decreasing the internal resistance of a battery while still being usable as an aqueous binder with low environmental burden. Further, according to the present invention, it is also possible to provide an electrode manufactured using the battery electrode binder, and a battery including the electrode.

### MODE FOR CARRYING OUT THE INVENTION

A battery electrode binder according to the present invention is characterized by having a core-shell structure that includes a core section (A) and a shell section (B), with the core section (A) containing a copolymer that has methyl methacrylate as a main component and the shell section (B) having a (meth)acrylate-based copolymer that contains a (meth)acrylate as a polymerization component and by having swelling rates of 10% or less and 30% or more for a resin constituting the core section (A) and a resin constituting the shell section (B), respectively, with respect to a mixed solvent having ethylene carbonate and diethyl carbonate mixed therein at a volume ratio of 3 : 7. Hereinafter, described in detail is the battery electrode binder, an electrode manufactured using the battery electrode binder, and a battery including the electrode according to the present invention.

In the present specification, the battery encompasses an electrochemical capacitor and is a primary battery or a secondary battery. Examples of the battery include a lithium-ion secondary battery and a nickel hydrogen secondary battery. In the present specification, the term "(meth)acrylate" means "an acrylate or a methacrylate," and the same applies to an expression similar to this term.

In the battery electrode binder according to the present invention, the above-mentioned specific resins constitute the core section (A) and the shell section (B), and the swelling rates are set to as very low as 10% or less for the resin constituting the core section (A) and to as high as 30% or more for the shell section (B) covering around the core section (A), with respect to an electrolyte solution generally used for, for example, a lithium-ion battery, i.e., the mixed solvent having ethylene carbonate (EC) and diethyl carbonate (DEC) mixed therein at a volume ratio of 3 : 7, so that the battery electrode binder is capable of effectively decreasing the internal resistance of a battery while exhibiting excellent bondability. Such an excellent effect can be considered to be brought about by a following mechanism.

That is, a high swelling rate of a battery electrode binder with an electrolyte solution causes the flexibility of the binder to increase in an electrode. This is considered to be capable of effectively increasing the bonding force of an electrode active material but increase the area of a surface of the electrode active material that is covered with the binder, causing a problem of increasing the internal resistance of a battery. On the other hand, a low swelling rate of a battery electrode binder with an electrolyte solution causes the flexibility of the binder to decrease in an electrode. This is considered to decrease the area of a surface of an electrode active material that is covered with the binder, not increasing the internal resistance of a battery, but to cause a problem of decreasing the bonding force of the electrode active material. In contrast, in the battery electrode binder according to the present invention, the binder is made to have a core-shell structure, with the above-mentioned specific resins constituting the core section (A) and the shell section (B), and the swelling rate of the core section (A) is set to as very low as 10% or less while the swelling rate of the shell section is set to as high as 30% or more. This configuration allows the core section (A), which is hard, to prevent the binder having a core-shell structure from crashing due to swelling with an electrolyte solution, thus decreasing the area of a surface of an electrode active material that is covered with the binder, while allowing the shell section that has become flexible by swelling to exhibit excellent bonding force. These effects are considered to result in achievement of both excellent bondability and a decrease in internal resistance of a battery.

Further, the battery electrode binder according to the present invention exists as particles having a core-shell structure to decrease the area of a cathode active material and an electrically conductive additive that is covered with the binder, providing dotted adhesion, so that it is possible to effectively decrease the internal resistance. This also enables a decrease of addition amount of the binder contained in a cathode. Further, the shell section (B) having a high swelling rate gives a merit of easily generating voids in a cathode to improve absorption of an electrolyte solution. A decrease of the internal resistance due to the merit improves conduction of electrons and ions to give an effect of improving charge discharge cycle characteristics. The battery electrode binder according to the present invention can be used as an aqueous binder (containing water as a solvent), so that the environmental burden is low and an organic solvent recovery apparatus is not required.

The battery electrode binder according to the present invention has such a specific core-shell structure to give excellent bendability to an electrode and further to be capable of improving the charge discharge cycle characteristics of a battery.

In the meantime, the battery electrode binder according to the present invention that has a core-shell structure is prevented from being dissolved in an electrolyte solution and does not substantially dissolve in an electrolyte solution. This insolubility can be further increased by using for a crosslinking agent component a structural unit derived from a polyfunctional (meth)acrylate monomer to form a more highly crosslinked structure. The battery electrode binder according to the present invention that has a core-shell structure may include between the core section (A) and the shell section (B) a portion where the core section (A) is compatible with the shell section (B).

In the present invention, a value measured as follows is the swelling rate with the mixed solvent having ethylene carbonate (EC) and diethyl carbonate (DEC) mixed therein at a volume ratio of 3 : 7. First, prepared is a resin whose swelling rate is to be measured. In the present invention, resins to be measured are the resin constituting the core section (A), the resin constituting the shell section (B), and the battery electrode binder according to the present invention that has a core-shell structure. The resins are each dried at atmospheric pressure under the condition of 150°C for 2 hours to remove moisture from the resins. The weight of each of the dried resins is made to be about 100 mg (the weight at this stage is defined as A (mg)). Next, the dried resins are immersed for 24 hours in a mixed solvent of ethylene carbonate (EC)/diethyl carbonate (DEC) = 3/7 (v/v) as a general solvent for a lithium-ion battery. Next, the resins are extracted from the mixed solvent and first immersed in DEC to wash EC away (normally in an immersion time of around 10 seconds at normal temperature (around 25°C) and normal pressure (around 1 atm)). Next, the resins are immersed in hexane to wash DEC away (normally in an immersion time of around 10 seconds at normal temperature (around 25°C) and normal pressure (around 1 atm)). Next, the resins that have been extracted from hexane are naturally dried for 5 minutes in an environment with a temperature of 25°C and a relative humidity of 50% and measured for the weight (the weight at this stage is defined as B (mg)). The increase rate from the weight A to the weight B is defined as the swelling rate of the resin. For example, when the weight B is double the weight A, the swelling rate is 100%.

From the viewpoint of effectively decreasing the internal resistance of a battery while allowing the battery electrode binder according to the present invention to exhibit excellent bondability, the swelling rate of the resin constituting the core section (A) may be 10% or less and is preferably 5% or less, more preferably 3% or less, further preferably 2% or less. The lower limit of the swelling rate is 0%.

The battery electrode binder according to the present invention is characterized in that the core section (A) contains a copolymer having methyl methacrylate as a main component. The methyl-based methacrylate-based copolymer is a copolymer having a structural unit derived from methyl methacrylate. From the viewpoint of setting the swelling rate of the core section (A) to 10% or less, the copolymer may contain, as a polymerization component, a hydroxy group-containing meth(acrylate) monomer, a (meth)acrylate ester monomer other than methyl methacrylate, a (meth)acrylic acid monomer, a polyfunctional (meth)acrylate monomer, or the like. In the present invention, the phrase "as a polymerization component of a copolymer" can also be expressed as "as a monomer component constituting a copolymer." These polymerization components can be used alone or in combination of at least two.

In the copolymer having methyl methacrylate as the main component, having methyl methacrylate "as the main component" means having a proportion of methyl methacrylate of 50% by weight or more in monomer components constituting the copolymer.

From the viewpoint of setting the swelling rate of the core section (A) to 10% or less, the hydroxy group-containing (meth)acrylate monomer is preferably an alkylene glycol mono(meth)acrylate having a molecular weight of 100 to 1000. Specific examples include diethylene glycol mono(meth)acrylate, triethylene glycol mono(meth)acrylate, tetraethylene glycol mono(meth)acrylate, polyethylene glycol mono(meth)acrylate, dipropylene glycol mono(meth)acrylate, tripropylene glycol mono(meth)acrylate, tetrapropylene glycol mono(meth)acrylate, and polypropylene glycol mono(meth)acrylate. These can be used alone or in combination of at least two. Among these examples, preferable are tetraethylene glycol mono(meth)acrylate, polyethylene glycol mono(meth)acrylate, tetrapropylene glycol mono(meth)acrylate, and polypropylene glycol mono(meth)acrylate.

Specific examples of the (meth)acrylate ester monomer other than methyl methacrylate include alkyl (meth)acrylate esters such as methyl acrylate, ethyl (meth)acrylate, propyl (meth)acrylate, isopropyl (meth)acrylate, n-butyl (meth)acrylate, isobutyl (meth)acrylate, n-pentyl (meth)acrylate, n-amyl (meth)acrylate, isoamyl (meth)acrylate, n-hexyl (meth)acrylate, n-heptyl (meth)acrylate, n-octyl (meth)acrylate, 2-ethylhexyl (meth)acrylate, and lauryl (meth)acrylate. Preferable are methyl (meth)acrylate, ethyl (meth)acrylate, propyl (meth)acrylate, and isopropyl (meth)acrylate. These (meth)acrylate ester monomers can be used alone or in combination of at least two.

Specific examples of the (meth)acrylic acid monomer include methacrylic acid and acrylic acid, which can be used alone or in combination of two. When the two acids, i.e., methacrylic acid and acrylic acid are combined, the weight ratio (methacrylic acid : acrylic acid) may be 1 : 99 to 99 : 1 and is preferably 5 : 95 to 95 : 5, particularly preferably 20 : 80 to 80 : 20.

The polyfunctional (meth)acrylate monomer serves as a crosslinking agent. From the viewpoint of setting the swelling rate of the core section (A) to 10% or less, the polyfunctional (meth)acrylate monomer is a di- to penta-functional (meth)acrylate. The di- to penta-functional crosslinking agent gives good dispersibility in emulsion polymerization, and excellent physical properties (bendability and bondability) as a binder. The polyfunctional (meth)acrylate monomer (C) is preferably a tri- or tetra-functional (meth)acrylate.

Specific examples of the di-functional (meth)acrylate include triethylene glycol di(meth)acrylate, tetraethylene glycol di(meth)acrylate, polyethylene glycol di(meth)acrylate, tripropylene glycol di(meth)acrylate, tetrapropylene glycol di(meth)acrylate, polypropylene glycol di(meth)acrylate, polytetramethylene glycol di(meth)acrylate, dioxane glycol di(meth)acrylate, and bis(meth)acryloyloxyethyl phosphate.

Specific examples of the tri-functional (meth)acrylate include trimethylolpropane tri(meth)acrylate, trimethylolpropane EO-added tri(meth)acrylate, trimethylolpropane PO-added tri(meth)acrylate, pentaerythritol tri(meth)acrylate, 2,2,2-tris(meth)acryloyloxy methyl ethyl succinate, ethoxylated isocyanuric acid tri(meth)acrylate, ε-caprolactone-modified tris-(2-(meth)acryloxyethyl) isocyanurate, glycerol EO-added tri(meth)acrylate, glycerol PO-added tri(meth)acrylate, and tris(meth)acryloyloxyethyl phosphate. Among these examples, preferable are trimethylolpropane tri(meth)acrylate, trimethylolpropane EO-added tri(meth)acrylate, and pentaerythritol tri(meth)acrylate.

Specific examples of the tetra-functional (meth)acrylate include ditrimethylolpropane tetra(meth)acrylate, pentaerythritol tetra(meth)acrylate, and pentaerythritol EO-added tetra(meth)acrylate.

Specific examples of the penta-functional (meth)acrylate include dipentaerythritol penta(meth)acrylate.

The polyfunctional (meth)acrylates can be used alone or in combination of at least two.

From the viewpoint of setting the swelling rate of the core section (A) to 10% or less, the amount of the structural unit of the polyfunctional (meth)acrylate is preferably 0.5 to 70 parts by weight, more preferably 1 to 60 parts by weight, further preferably 2 to 50 parts by weight, based on 100 parts by weight of methyl methacrylate.

In the copolymer constituting the core section (A), the content of a structural unit (A-2) derived from the methyl methacrylate monomer is the highest, and among a structural unit (A-1) derived from the hydroxy group-containing (meth)acrylate monomer, structural units (A-2) derived from the (meth)acrylate ester monomers (total of methyl methacrylate and the (meth)acrylate ester monomer other than methyl methacrylate), a structural unit (A-3) derived from the (meth)acrylic acid monomer, and a structural unit (C) derived from the polyfunctional (meth)acrylate monomer, the ratio is preferably 0 to 30% by weight of (A-1), 10 to 99% by weight of (A-2), 0.5 to 20% by weight of (A-3), and 0.5 to 40% by weight of (C), more preferably 1 to 20% by weight of (A-1), 50 to 90% by weight of (A-2), 1 to 15% by weight of (A-3), and 1 to 30% by weight of (C).

Regarding the ratio between the structural unit derived from methyl methacrylate and the structural unit derived from another (meth)acrylate ester monomer in the structural units (A-2) derived from the (meth)acrylate ester monomers, the structural unit derived from methyl methacrylate is preferably 60 to 100% by weight.

The copolymer of the core section (A) that has methyl methacrylate as the main component can have, as a structural unit derived from another monomer, a structural unit derived from a monomer selected from fumaric acid, maleic acid, itaconic acid, citraconic acid, mesaconic acid, glutaconic acid, acrylonitrile, methacrylonitrile, α-chloroacrylonitrile, crotononitrile, α-ethylacrylonitrile, α-cyanoacrylate, vinylidene cyanide, or fumaronitrile.

From the viewpoint of effectively decreasing the internal resistance of a battery while allowing the battery electrode binder according to the present invention to exhibit excellent bondability, the swelling rate of the resin constituting the shell section (B) may be 30% or more and is preferably 40% or more, more preferably 45% or more, further preferably 50% or more. The upper limit of the swelling rate is preferably 200% or less, more preferably 150% or less, further preferably 100% or less.

From the same viewpoint, the swelling rate of the battery electrode binder according to the present invention that has a core-shell structure is normally about the same as the swelling rate of the resin constituting the shell section (B), and preferably 30% or more, more preferably 40% or more, further preferably 45% or more, furthermore preferably 50% or more. The upper limit of the swelling rate may be preferably 200% or less, more preferably 150% or less, further preferably 100% or less.

In the battery electrode binder according to the present invention, the shell section (B) is characterized by having a (meth)acrylate-based copolymer that contains a (meth)acrylate as a polymerization component.

From the viewpoint of setting the swelling rate of the shell section (B) to 30% or more, a glass transition point (Tg) when the (meth)acrylate is made into a homopolymer (in terms of the weight average molecular weight of a (meth)acrylate portion in the copolymer constituting the shell section (B)) is preferably 20°C or lower. The glass transition point (Tg) of the (meth)acrylate homopolymer is a value obtained by measurement with a differential scanning calorimeter (DSC).

The (meth)acrylate-based copolymer of the present invention may contain, as the polymerization component, in addition to the (meth) acrylate, a hydroxy group-containing (meth)acrylate monomer, a (meth)acrylate ester monomer that gives a (meth)acrylate homopolymer having a glass transition point (Tg) of higher than 20°C, a (meth)acrylic acid monomer, a polyfunctional (meth)acrylate monomer, or the like. These polymerization components can be used alone or in combination of at least two.

From the viewpoint of setting the swelling rate of the shell section (B) to 30% or more, the (meth)acrylate that gives a homopolymer having a Tg of 20°C or lower is, for example, methyl acrylate, ethyl acrylate, propyl acrylate, butyl acrylate, 2-ethylhexyl acrylate, or 2-ethylhexyl methacrylate. Among these examples, suitably used is ethyl acrylate, propyl acrylate, butyl acrylate, or 2-ethylhexyl acrylate.

From the viewpoint of setting the swelling rate of the shell section (B) to 30% or more, the hydroxy group-containing (meth)acrylate monomer is preferably an alkylene glycol mono(meth)acrylate, more preferably an alkylene glycol mono(meth)acrylate having a molecular weight of 100 to 1000. Specific examples include diethylene glycol mono(meth)acrylate, triethylene glycol mono(meth)acrylate, tetraethylene glycol mono(meth)acrylate, polyethylene glycol mono(meth)acrylate, dipropylene glycol mono(meth)acrylate, tripropylene glycol mono(meth)acrylate, tetrapropylene glycol mono(meth)acrylate, and polypropylene glycol mono(meth)acrylate. These can be used alone or in combination of at least two. Among these examples, preferable are tetraethylene glycol mono(meth)acrylate, polyethylene glycol mono(meth)acrylate, tetrapropylene glycol mono(meth)acrylate, and polypropylene glycol mono(meth)acrylate. The monomers used in the core section (A) and the shell section (B) may be different.

Examples of the (meth)acrylate ester monomer that gives a (meth)acrylate homopolymer having a glass transition point (Tg) of higher than 20°C include alkyl methacrylate esters such as methyl methacrylate, ethyl methacrylate, propyl methacrylate, isopropyl methacrylate, n-butyl methacrylate, isobutyl methacrylate, n-amyl methacrylate, isoamyl methacrylate, and n-hexyl methacrylate. These can be used alone or in combination of at least two.

The polyfunctional (meth)acrylate monomer serves as a crosslinking agent. From the viewpoint of setting the swelling rate of the shell section (B) to 30% or more, the polyfunctional (meth)acrylate monomer is a di- to penta-functional (meth)acrylate. The di- to penta-functional crosslinking agent gives good dispersibility in emulsion polymerization, and excellent physical properties (bendability and bondability) as a binder. The polyfunctional (meth)acrylate monomer (C) is preferably a tri- or tetra-functional (meth)acrylate. The monomers used in the core section (A) and the shell section (B) may be the same or different.

Specific examples of the di-functional (meth)acrylate include triethylene glycol di(meth)acrylate, tetraethylene glycol di(meth)acrylate, polyethylene glycol di(meth)acrylate, tripropylene glycol di(meth)acrylate, tetrapropylene glycol di(meth)acrylate, polypropylene glycol di(meth)acrylate, polytetramethylene glycol di(meth)acrylate, dioxane glycol di(meth)acrylate, and bis(meth)acryloyloxyethyl phosphate.

Specific examples of the tri-functional (meth)acrylate include trimethylolpropane tri(meth)acrylate, trimethylolpropane EO-added tri(meth)acrylate, trimethylolpropane PO-added tri(meth)acrylate, pentaerythritol tri(meth)acrylate, 2,2,2-tris(meth)acryloyloxy methyl ethyl succinate, ethoxylated isocyanuric acid tri(meth)acrylate, ε-caprolactone-modified tris-(2-(meth)acryloxyethyl) isocyanurate, glycerol EO-added tri(meth)acrylate, glycerol PO-added tri(meth)acrylate, and tris(meth)acryloyloxyethyl phosphate. Among these examples, preferable are trimethylolpropane tri(meth)acrylate, trimethylolpropane EO-added tri(meth)acrylate, and pentaerythritol tri(meth)acrylate.

Specific examples of the tetra-functional (meth)acrylate include ditrimethylolpropane tetra(meth)acrylate, pentaerythritol tetra(meth)acrylate, and pentaerythritol EO-added tetra(meth)acrylate.

Specific examples of the penta-functional (meth)acrylate include dipentaerythritol penta(meth)acrylate.

The polyfunctional (meth)acrylates can be used alone or in combination of at least two.

The (meth)acrylate-based copolymer in the shell section (B) of the present invention is preferably a polymer having a structural unit derived from the (meth)acrylate that give a homopolymer having a Tg of 20°C or lower, a structural unit derived from the hydroxy group-containing (meth)acrylate-based monomer, a structural unit derived from the (meth)acrylate ester monomer that gives a homopolymer having a Tg of higher than 20°C, a structural unit derived from the (meth)acrylic acid monomer, and a structural unit derived from the polyfunctional (meth)acrylate monomer.

In the (meth)acrylate-based copolymer of the shell section (B), among the structural unit (B-1) derived from the hydroxy group-containing monomer, the structural units (B-2) derived from the (meth)acrylate ester monomers (total of the (meth)acrylate that gives a homopolymer having a Tg of 20°C or lower and the (meth)acrylate ester monomer that gives a homopolymer having a Tg of higher than 20°C), the structural unit (B-3) derived from the (meth)acrylic acid monomer, and the structural unit (C) derived from the polyfunctional (meth)acrylate monomer, the ratio is preferably 0.5 to 15% by weight of (B-1), 35 to 98.5% by weight of (B-2), 0.5 to 20% by weight of (B-3), and 0.5 to 30% by weight of (C), more preferably 1 to 10% by weight of (B-1), 50 to 90% by weight of (B-2), 1 to 15% by weight of (B-3), and 1 to 20% by weight of (C).

Regarding the ratio between the structural unit derived from the (meth)acrylate monomer that gives a homopolymer having a Tg of 20°C or lower and the structural unit derived from the (meth)acrylate ester monomer that gives a homopolymer having a Tg of higher than 20°C in the structural units (B-2) derived from the (meth)acrylate ester monomers, the structural unit derived from the (meth)acrylate monomer that gives a homopolymer having a Tg of 20°C or lower is preferably 50 to 100% by weight.

The (meth)acrylate-based copolymer in the shell section (B) can have, as a structural unit derived from another monomer, a structural unit derived from a monomer selected from fumaric acid, maleic acid, itaconic acid, citraconic acid, mesaconic acid, glutaconic acid, acrylonitrile, methacrylonitrile, α-chloroacrylonitrile, crotononitrile, α-ethylacrylonitrile, α-cyanoacrylate, vinylidene cyanide, or fumaronitrile.

As a method of obtaining the copolymer in the core section (A) of the present invention that has methyl methacrylate as the main component, there can be used, for example, a general emulsion polymerization method, a soap free emulsion polymerization method, a seed polymerization method, or a method of conducting polymerization after swelling seed particles with a monomer or the like. Specifically, in a closed container equipped with a stirrer and a heating device, a composition is stirred at room temperature in an inert gas atmosphere to emulsify, for example, a monomer in water, the composition containing the monomer, an emulsifier, a polymerization initiator, and water as well as an optionally used dispersing agent, chain transfer agent, pH adjuster, or the like. As an emulsification method, there can be employed, for example, a stirring method, a shearing method, or an ultrasonic method, and there can be used, for example, a stirring blade or a homogenizer. Subsequently, polymerization can be started by raising the temperature of the emulsion under stirring to give a latex containing a spherical polymer and water having the polymer dispersed therein. A method of adding the monomer during polymerization may be one-package charging, or alternatively, monomer dropping or pre-emulsion dropping. These methods may be used in combination of at least two.

A method of forming, around the core section (A) of the present invention, the shell section (B) constituted by the (meth)acrylate-based copolymer is, for example, forming a polymer latex containing composite polymer particles having a core-shell structure, with the core section obtained by polymerization according to the above methods serving as a seed particle. For example, a method described in "Chemistry of dispersion/emulsification system" (published by Kougakutosho Ltd.) can be used for the seed polymerization method. Specifically, the method is carried out by adding a monomer, a polymerization initiator, and an emulsifier to a system having therein core particles produced by the above methods to grow nuclear particles. This method may be repeated at least once.

The method of forming the shell section (B) of the present invention also includes a method of obtaining monomer particles as the core section (A) through polymerization, followed by slight isolation of the monomer particles, and dispersing the monomer particles in water again using, for example, a monomer, an emulsifier and a dispersing agent to form the shell section (B) and thus give a polymer latex.

As a manufacturing apparatus, an emulsifier, a polymerization initiator, and water as well as an optionally used dispersing agent, chain transfer agent, pH adjuster, or the like for forming the shell section (B), it is possible to use the same apparatus and materials as those used for manufacturing the particles as the core section (A). A method of adding a monomer during polymerization may be, for example, monomer dropping or emulsion dropping. The core section (A) and the shell section (B) are preferably manufactured continuously by the monomer dropping method in terms of production efficiency and costs.

As a particle shape of the polymer having a core-shell structure in the binder according to the present invention, there can be exemplified, in addition to the spherical shape, a plate shape, a hollow structure, a composite structure, a localized structure, a Daruma-shaped structure, an octopus-shaped structure, and a raspberry-shaped structure. Particles can be used that have at least two types of structures and composition, without departing from the present invention.

The particle diameter of the polymer in the battery electrode binder according to the present invention can be measured by, for example, a dynamic light scattering method, a transmission electron microscope method, or optical microscopy. An average particle diameter calculated from the scattering intensity obtained using the dynamic light scattering method is, for example, 1 nm to 10 µm, preferably 10 nm to 1 µm, more preferably 50 nm to 300 nm. Specific examples of a measurement apparatus according to the dynamic light scattering method include Zetasizer Nano manufactured by Spectris pic., LB-500 manufactured by HORIBA, Ltd., and NANOPHOX/R manufactured by Sympatc GmbH.

The emulsifier used in the present invention is not particularly limited. The emulsifier is a surfactant, which includes a reactive surfactant having a reactive group. In the emulsion polymerization method, it is possible to use, for example, a generally used nonionic surfactant or anionic surfactant. Examples of the nonionic surfactant include a polyoxyethylene alkyl ether, a polyoxyethylene alcohol ether, a polyoxyethylene alkyl phenyl ether, a polyoxyethylene polycyclic phenyl ether, a polyoxyalkylene alkyl ether, a sorbitan fatty acid ester, a polyoxyethylene fatty acid ester, and a polyoxyethylene sorbitan fatty acid ester. Examples of the reactive nonionic surfactant include LATEMUL PD-420, 430, and 450 (manufactured by Kao Corporation), ADEKA REASOAP ER (manufactured by ADEKA Corporation), AQUALON RN (manufactured by DKS Co. Ltd.), Antox LMA (manufactured by NIPPON NYUKAZAI CO., LTD.), and Antox EMH (manufactured by NIPPON NYUKAZAI CO., LTD.).

Examples of the anionic surfactant include a sulfate ester-type, carboxylic acid-type or sulfonic acid-type metal salt, ammonium salt, or triethanolammonium salt, and a phosphate ester-type surfactant. A sulfate ester-type, a sulfonic acid-type, and a phosphate ester-type are preferable, and a sulfate ester-type is particularly preferable. Representative examples of the sulfate ester-type anionic surfactant include a metal salt, ammonium, or triethanolamine of an alkyl sulfate such as dodecyl sulfate; and a metal salt, ammonium salt, or triethanolamine of a polyoxyethylene alkyl ether sulfate such as polyoxyethylene dodecyl ether sulfate, polyoxyethylene isodecyl ether sulfate, or polyoxyethylene tridecyl ether sulfate. Specific examples of the sulfate ester-type reactive anionic surfactant include LATEMUL PD-104 and 105 (manufactured by Kao Corporation), ADEKA REASOAP SR (manufactured by ADEKA Corporation), AQUALON HS (manufactured by DKS Co. Ltd.), and AQUALON KH (manufactured by DKS Co. Ltd.). Preferable are, for example, sodium dodecyl sulfate, ammonium dodecyl sulfate, triethanolamine dodecyl sulfate, sodium dodecylbenzenesulfonate, and LATEMUL PD-104. These nonionic surfactants and/or anionic surfactants may be used alone or in combination of at least two.

The reactivity of the reactive surfactant means containing a reactive double bond and undergoing a polymerization reaction with a monomer during polymerization. That is, the reactive surfactant serves as an emulsifier for a monomer in polymerization for producing a polymer and is incorporated in a part of the polymer with a covalent bond after the polymerization. Therefore, the use of the reactive surfactant improves the emulsion polymerization and the dispersion of the produced polymer to give a binder having excellent physical properties (bendability and bondability). Further, the reactive surfactant is considered to become a part of the polymer, not separating from the polymer, to be prevented from being dissolved in an electrolyte solution and thus improve battery performance.

The amount of a structural unit of the emulsifier may be an amount generally used in the emulsion polymerization method. Specifically, the amount ranges from 0.01 to 25% by weight, preferably from 0.05 to 20% by weight, more preferably 0.1 to 20% by weight, based on charged monomers.

The polymerization initiator used in the present invention is not particular limited, and there can be used a polymerization initiator generally used in the emulsion polymerization method or a suspension polymerization method. The emulsion polymerization method is preferable. A water-soluble polymerization initiator is used in the emulsion polymerization method and an oil-soluble polymerization initiator is used in the suspension polymerization method.

Specific examples of the water-soluble polymerization initiator include water-soluble polymerization initiators represented by persulfate salts such as potassium persulfate, sodium persulfate, and ammonium persulfate; and polymerization initiators of water-soluble azo compounds such as 2,2'-azobis[2-(2-imidazolin-2-yl) propane] and hydrochlorides or hydrosulfates thereof, 2,2'-azobis[2-methyl-N-(2-hydroxyethyl)propionamide], 2,2'-azobis(2-methylpropanamidine) and hydrochlorides or hydrosulfates thereof, 3,3'-[azobis[(2,2-dimεthyl-1-iminoethane-2,1-diyl)imino]]bis(propanoic acid), and 2,2'-[azobis(dimethylmethylene)]bis(2-imidazoline).

As the oil-soluble polymerization initiator, preferable are polymerization initiators of organic peroxides such as cumene hydroperoxide, benzoyl peroxide, acetyl peroxide, and t-butyl hydroperoxide; polymerization initiators of oil-soluble azo compound such as azobisisobutyronitrile and 1,1'-azobis(cyclohexanecarbonitrile); and a redox initiator. These polymerization initiators may be used alone or in combination of at least two.

The usage of the polymerization initiator may be an amount generally applied in the emulsion polymerization method or the suspension polymerization method. Specifically, the usage ranges from 0.01 to 10% by weight, preferably from 0.01 to 5% by weight, more preferably from 0.02 to 3% by weight, based on charged monomers.

A chain transfer agent can be used as necessary. Specific examples of the chain transfer agent include alkyl mercaptans such as n-hexyl mercaptan, n-octyl mercaptan, t-octyl mercaptan, n-dodecyl mercaptan, t-dodecyl mercaptan, and n-stearyl mercaptan; 2,4-diphenyl-4-methyl-1-pentene, 2,4-diphenyl-4-methyl-2-pentene; xanthogen compounds such as dimethylxanthogen disulfide and diisopropylxanthogen disulfide; terpinolene; thiuram-based compounds such as tetramethylthiuram disulfide, tetraethylthiuram disulfide, and tetramethylthiuram monosulfide; phenol-based compounds such as 2,6-di-t-butyl-4-methyl phenol and styrenated phenol; allyl compounds such as allyl alcohol; halogenated hydrocarbon compounds such as dichloromethane, dibromomethane, and carbon tetrabromide; vinyl ethers such as α -benzyloxystyrene, α-benzyloxyacrylonitrile, and α-benzyloxyacrylamide; triphenylethane, pentaphenylethane, acrolein, methacrolein, thioglycolic acid, thiomalic acid, and 2-ethylhexyl thioglycolate. These chain transfer agents may be used alone or in combination of at least two. The amount of these chain transfer agents is not particularly limited and is normally used in an amount of 0 to 5 parts by weight, based on 100 parts by weight of charged monomers.

The polymerization time and the polymerization temperature for the core section (A) and the shell section (B) are not particularly limited. The polymerization time and the polymerization temperature can be appropriately selected according to, for example, the type of a used polymerization initiator. Generally, the polymerization temperature is 20 to 100°C and the polymerization time is 0.5 to 100 hours.

The polymer obtained by the above methods can have its pH adjusted using a base as a pH adjuster as necessary. Specific examples of the base include ammonia, an inorganic ammonium compound, and an organic amine compound. The pH ranges from 2 to 11, preferably from 3 to 10, more preferably from 4 to 9.

### <Method of Preparation of Battery Electrode Slurry>

A method of preparation of a battery electrode slurry is not particularly limited. The slurry may be prepared by dispersing, for example, a cathode active material or an anode active material, the battery electrode binder according to the present invention, a thickening agent, an electrically conductive additive, and water with a normal stirrer, dispersion machine, kneading machine, planetary ball mill, homogenizer, or the like. The slurry materials may be heated in order to increase the dispersion efficiency without affecting the slurry materials.

In the present invention, a method of manufacturing a battery is not particularly limited as long as a cathode contains at least a cathode active material, an electrically conductive additive, and a binder, and the binder exists together with the electrically conductive additive between cathode active materials while keeping its particle shape. As the method, there can be exemplified a method characterized by including the steps of dispersing a cathode active material and a binder in an aqueous solvent, further adding and dispersing an electrically conductive additive, and applying the obtained slurry solution onto a current collector and drying the slurry solution.

The water is not particularly limited that is used for producing the battery electrode slurry containing the binder according to the present invention, and water for general use can be used. Specific examples of water include tap water, distilled water, ion exchange water, and ultrapure water. Among them, distilled water, ion exchange water, and ultrapure water are preferable.

The cathode active material included in the cathode is an alkali metal-containing composite oxide with composition of AMO₂, AM₂O₄, A₂MO₃, or AMBO₄. A represents an alkali metal. M represents a single or at least two transition metals, a part of which may contain a non-transition metal. B represents P, Si, or a mixture of P and Si. The cathode active material is preferably a powder, and a power is used that has a particle diameter of preferably 50 µm or less, more preferably 20 µm or less. These active materials have an electromotive force of at least 3 V (vs. Li/Li+).

Preferable specific examples of the cathode active material include lithium-containing composite oxides such as LiₓCoO₂, LiₓNiO₂, LiₓMnO₂, LiₓCrO₂, LiₓFeO₂, LiₓCOaMn₁₋ₐO₂, LiₓCoaNi₁₋ₐO₂, LiₓCOₐCr₁₋ₐO₂, LiₓCoₐFe₁₋ₐO₂, LiₓCoₐTi₁₋ₐO₂, LiₓMnₐNi₁₋ₐO₂, LiₓMnₐCr₁₋ₐO₂, LiₓMnₐFe₁₋ₐO₂, LiₓMnₐTi₁₋ₐO₂, LiₓNiₐCr₁₋ₐO₂, LiₓNiₐFe₁₋ₐO₂, LiₓNiₐTi₁₋ₐO₂, LiₓCrₐFe₁₋ₐO₂, LiₓCrₐTi₁₋ₐO₂, LiₓFeₐTi₁₋ₐO₂, LiₓCo_{b}Mn_{c}Ni_{1-b-c}O₂, LiₓCr_{b}Mn_{c}Ni_{1-b-c}O₂, LiₓFe_{b}Mn_{c}Ni_{1-b-c}O₂, LiₓTi_{b}Mn_{c}Ni_{1-b-c}O₂, LiₓMn₂O₄, LiₓMn_{d}Co_{2-d}O₄, LiₓMn_{d}Ni_{2-d}O₄, LiₓMn_{d}Cr_{2-d}O₄, LiₓMn_{d}Fe_{2-d}O₄, LiₓMn_{d}Ti_{2-d}O₄, Li_{y}MnO₃, Li_{y}MnₑCO₁₋ₑO₃, Li_{y}MnₑNi₁₋ₑO₃, Li_{y}MnₑFe₁₋ₑO₃, Li_{y}MnₑTi₁₋ₑO₃, LiₓCoPO₄, LiₓMnPO₄, LiₓNiPO₄, LiₓFePO₄, LiₓCo_{f}Mn_{1-f}PO₄, LiₓCo_{f}Ni_{1-f}PO₄, LiₓCo_{f}Fe_{1-f}PO₄, LiₓMn_{f}Ni_{1-f}PO₄, LiₓMn_{f}Fe_{1-f}PO₄, LiₓNi_{f}Fe_{1-f}PO₄, Li_{y}CoSiO₄, Li_{y}MnSiO₄, Li_{y}NiSiO₄, Li_{y}FeSiO₄, Li_{y}Co_{g}Mn_{1-g}SiO₄, Li_{y}Co_{g}Ni_{1-g}SiO₄, Li_{y}Co_{g}Fe_{1-g}SiO₄, Li_{y}Mn_{g}Ni_{1-g}SiO₄, Li_{y}Mn_{g}Fe_{1-g}SiO₄, Li_{y}Ni_{g}Fe_{1-g}SiO₄, Li_{y}CoPₕSi₁₋ₕO₄, Li_{y}MnPₕSi₁₋ₕO₄, Li_{y}NiPₕSi₁₋ₕO₄, Li_{y}FePₕSi₁₋ₕO₄, Li_{y}Co_{g}Mn_{1-g}PₕSi₁₋ₕO₄, Li_{y}Co_{g}Ni_{1-g}PₕSi₁₋ₕO₄, Li_{y}Co_{g}Fe_{1-g}PₕSi₁₋ₕO₄, Li_{y}Mn_{g}Ni_{1-g}PₕSi₁₋ₕO₄, Li_{y}Mn_{g}Fe_{1-g}PₕSi₁₋ₕO₄, and Li_{y}Ni_{g}Fe_{1-g}PₕSi_{1-b}O₄. (Here, x is 0.01 to 1.2, y is 0.01 to 2.2, a is 0.01 to 0.99, b is 0.01 to 0.98 and c is 0.01 to 0.98 while b + c satisfying 0.02 to 0.99, d is 1.49 to 1.99, e is 0.01 to 0.99, f is 0.01 to 0.99, g is 0.01 to 0.99, and h is 0.01 to 0.99.)

Among the preferable cathode active materials, more preferable cathode active materials include specifically LiₓCoO₂, LiₓNiO₂, LiₓMnO₂, LiₓCrO₂, LiₓCoₐNi₁₋ₐO₂, LiₓMnₐNi₁₋ₐO₂, LiₓCo_{b}Mn_{c}Ni_{1-b-c}O₂, LiₓMn₂O₄, Li_{y}MnO₃, Li_{y}MnₑFe₁₋ₑO₃, Li_{y}MnₑTi₁₋ₑO₃, LiₓCoPO₄, LiₓMnPO₄, LiₓNiPO₄, LiₓFePO₄, and LiₓMn_{f}Fe_{1-f}PO₄. (Here, x is 0.01 to 1.2, y is 0.01 to 2.2, a is 0.01 to 0.99, b is 0.01 to 0.98 and c is 0.01 to 0.98 while b + c satisfying 0.02 to 0.99, d is 1.49 to 1.99, e is 0.01 to 0.99, and f is 0.01 to 0.99. The values of x and y increase or decrease according to charging and discharging.)

The anode active material used in the present invention is a powder containing a carbon material (e.g., natural graphite, artificial graphite, and amorphous carbon) that has a structure (porous structure) capable of intercalating and deintercalating a lithium ion or containing a metal, such as lithium, an aluminum-based compound, a tin-based compound, a silicon-based compound, or a titanium-based compound, that is capable of intercalating and deintercalating a lithium ion. The particle diameter is preferably 10 nm or more and 100 µm or less, more preferably 20 nm or more and 20 µm or less. Alternatively, a mixed active material may be used that contains the metal and the carbon material. It is desired to use an anode active material having a porosity of around 70%.

Specific examples of the electrically conductive additive include graphite; conductive carbon black such as furnace black, acetylene black, and ketjen black; carbon fibers such as a carbon nanotube; and a metal powder. These electrically conductive additives may be used alone or in combination of at least two.

In order to improve the application properties of the battery electrode slurry, a dispersing agent can be added as necessary to the binder according to the present invention in advance or to the battery electrode slurry. The type and the usage of the dispersing agent is not particularly limited, and a dispersing agent generally used can be freely used in an appropriate amount.

The battery electrode of the present invention may contain a thickening agent as necessary. The type of the thickening agent is not particularly limited, but the thickening agent is preferably an ammonium salt of a cellulose-based compound containing no metal atom, polyvinyl alcohol, or polyacrylic acid.

Examples of the ammonium salt of a cellulose-based compound include an ammonium salt of an alkyl cellulose obtained by substituting a cellulose-based polymer with various derivative groups. Specific examples include ammonium salts and triethanol ammonium salts of methyl cellulose, methyl ethyl cellulose, ethyl cellulose, or carboxymethyl cellulose (CMC). An ammonium salt of carboxymethyl cellulose is particularly preferable. These ammonium salt-containing cellulose-based compounds may be used alone or in combination of at least two at an appropriate ratio.

The usage of the thickening agent used in the present invention ranges from 5% by weight to 500% by weight, preferably from 20% by weight to 400% by weight, further preferably from 50% by weight to 300% by weight, based on the amount of the polymer.

In order to improve the application properties of the battery electrode slurry, a defoaming agent can be added to the binder according to the present invention in advance or to the battery electrode slurry. Addition of the defoaming agent makes the dispersibility of the components good when the battery electrode slurry is prepared, to improve the application properties of the slurry and prevent a defect that is caused by an air bubble left in the electrode, resulting in improvement of the yield in the manufacture of batteries. The defoaming agent preferably contains no metal atom and is, for example, a silicone-based defoaming agent, a mineral oil-based defoaming agent, or a polyether-based defoaming agent. A silicone-based or mineral oil-based defoaming agent is preferable. Examples of the silicone-based defoaming agent include dimethyl silicone-based, methylphenyl silicone-based, and methyl vinyl silicone-based defoaming agents. A dimethyl silicone-based defoaming agent is preferable. The defoaming agent can be used as an emulsion-type defoaming agent obtained by dispersing the defoaming agent together with a surfactant in water. These defoaming agents can be used alone or in a mixture of at least two.

The solid concentration of the slurry containing the battery electrode binder according to the present invention is 10 to 90% by weight, preferably 20 to 85% by weight, more preferably 30 to 80% by weight.

The proportion of the amount of the polymer in the solid content in the slurry containing the battery electrode binder according to the present invention is 0.1 to 15% by weight, preferably 0.2 to 10% by weight, more preferably 0.3 to 7% by weight.

### <Method of Producing Battery Electrode>

A method of producing a battery electrode is not particularly limited and a general method is used. The method is carried out by uniformly applying the battery electrode slurry (coating liquid) onto a surface of a current collector (metal electrode substrate) at appropriate thickness by, for example, a doctor blade method, an applicator method, or a silk screen method.

For example, in the doctor blade method, the battery electrode slurry is applied onto a metal electrode and then uniformized at appropriate thickness by a blade having a predetermined slit width. The electrode having the active material applied thereto is dried, for example, by a 100°C hot blast or under vacuum at 80°C to remove an organic solvent and water that are excessive. The dried electrode is subjected to press molding by a press apparatus to manufacture an electrode material. After pressed, the electrode may be heat-treated again to remove, for example, water, a solvent, and an emulsifier.

### <Method of Manufacturing Battery>

A method of manufacturing a battery, particularly a secondary battery including the electrode according to the present invention is not particularly limited. The battery includes a cathode, an anode, a separator, an electrolyte solution, a current collector and is manufactured by a publicly known method. For example, in a case of a coin-shaped lithium-ion secondary battery, the cathode, the separator, and the anode are inserted into a cover can, into which the electrolyte solution is charged for impregnation. Then, the cover can is joined to a sealing body by a tab welding to encapsulate the sealing body and is caulked to give a storage battery. The shape of the battery is not limited and examples include a coin shape, a cylinder shape, and a sheet shape. The battery may have a structure with at least two batteries stacked.

The separator prevents a short circuit in the battery caused by direct contact between the cathode and the anode, and a publicly known material can be used for the separator. Specifically, the separator is formed of, for example, a porous polymer (e.g., polyolefin) film or paper. As this porous polymer film, a film of, for example, polyethylene or polypropylene is preferable because it is not affected by the electrolyte solution.

The electrolyte solution is a solution containing, for example, an electrolyte lithium salt compound and an aprotic organic solvent as a solvent. Used as the electrolyte lithium salt compound is a lithium salt compound that is generally used for a lithium-ion battery and has a wide potential window. Examples include LiBF₄, LiPF₆, LiClO₄, LiCF₃SO₃, LiN(CF₃SO₂)₂, LiN(C₂F₅SO₂)₂, and LiN[CF₃SC(C₂F₅SO₂)₃]₂. The lithium salt compound, however, is not limited to these examples. These may be used alone or in a mixture of at least two.

As the aprotic organic solvent, there can be used propylene carbonate, ethylene carbonate, dimethyl carbonate, diethyl carbonate, methyl ethyl carbonate, 1,2-dimethoxyethane, 1,2-diethoxyethane, γ-butyrolactone, tetrahydrofuran, 1,3-dioxolane, dipropyl carbonate, diethyl ether, sulfolane, methylsulfolane, acetonitrile, propylnitrile, anisole, an acetate ester, a propionate ester, or linear ethers such as diethyl ether. These aprotic organic solvents may be used in a mixture of at least two.

A normal-temperature molten salt can also be used as the solvent. The normal-temperature molten salt refers to a salt at least a part of which exhibits a liquid state at normal temperature, and the normal temperature refers to a temperature range in which a power source is assumed to be normally operated. The temperature range in which a power source is assumed to be normally operated is as the upper limit around 120°C and around 60°C in some cases and as the lower limit around -40°C and around -20°C in some cases.

The normal-temperature molten salt is also referred to as an ionic liquid, and known is a pyridine-based, aliphatic amine-based, or cycloaliphatic amine-based quaternary ammonium organic cation. Examples of the quaternary ammonium organic cation include an imidazolium ion of dialkylimidazolium, trialkylimidazolium, or the like, a tetraalkylammonium ion, an alkylpyridinium ion, a pyrazolium ion, a pyrrolidinium ion, and a piperidinium ion. Particularly, an imidazolium cation is preferable.

Examples of the tetraalkylammonium ion include a trimethylethylammonium ion, a trimethylethylammonium ion, a trimethylpropylammonium ion, a trimethylhexylammonium ion, a tetrapentylammonium ion, and a triethylmethylammonium ion. The tetraalkylammonium ion, however, is not limited to these examples.

Examples of the alkylpyridinium ion include an N-methylpyridinium ion, an N-ethylpyridinium ion, an N-propylpyridinium ion, an N-butylpyridinium ion, a 1-ethyl-2-methylpyridinium ion, a 1-butyl-4-methylpyridinium ion, and a 1-butyl-2,4-dimethylpyridinium ion. The alkylpyridinium ion, however, is not limited to these examples.

Examples of the imidazolium cation include a 1,3-dimethylimidazolium ion, a 1-ethyl-3-methylimidazolium ion, a 1-methyl-3-ethylimidazolium ion, a 1-methyl-3-butylimidazolium ion, a 1-butyl-3-methylimidazolium ion, a 1,2,3-trimethylimidazolium ion, a 1,2-dimethyl-3-ethylimidazolium ion, a 1,2-dimethyl-3-propylimidazolium ion, and a 1-butyl-2,3-dimethylimidazolium ion. The imidazolium cation, however, is not limited to these examples.

These cation-containing normal-temperature molten salts may be used alone or in a mixture of at least two.

The electrolyte solution can contain various additive agents as necessary. For example, as a flame retardant or a nonflammable agent, there can be exemplified halides such as a brominated epoxy compound, a phosphazene compound, tetrabromobisphenol A, and chlorinated paraffin, antimony trioxide, antimony pentaoxide, aluminum hydroxide, magnesium hydroxide, a phosphate ester, a polyphosphate salt, and zinc borate. As an anode surface treatment agent, there can be exemplified vinylene carbonate, fluoroethylene carbonate, and polyethylene glycol dimethyl ether. As a cathode surface treatment agent, there can be exemplified inorganic compounds such as carbon and a metal oxide (e.g., MgO and ZrO₂), and organic compounds such as o-terphenyl. As an overcharge inhibitor, there can be exemplified biphenyl and 1-(p-tolyl)-adamantane.

### EXAMPLES

A specific embodiment for carrying out the present invention is described by way of the following examples. The present invention, however, is not limited to the following examples without departing from the scope of the present invention.

In the present examples, electrodes and coin batteries were produced, and the following experiments were conducted to evaluate the electrodes by a bending test and a bondability test for the electrodes and to evaluate the coin batteries by internal resistance measurement and a charge discharge cycle characteristic test.

### [Evaluation for Physical Properties of Produced Electrodes]

A bending test and a bondability test were conducted to evaluate the physical properties of produced electrodes. Table 1 shows all the evaluation results.

### <Bending Test>

The bending test was conducted by a mandrel bending test. Specifically, an electrode was cut into a piece having a width of 3 cm and a length of 8 cm, the piece was bent at the longitudinal center (at a 4 cm portion) toward a base material side (so that an electrode surface was directed outside) at an angle of 180° while supported by a 2 mm diameter stainless steel stick, and the state of coating at the bent portion was observed. The measurement was carried out 5 times according to this method. The evaluation was conducted by the marks ○ and × that respectively denote the electrode that had on the surface thereof neither crack nor flaking and was not peeled at all from the current collector all the 5 times and the electrode that generated at least one crack or peeling even once.

### <Bondability Test>

The bondability test was conducted by a cross cut test. Specifically, an electrode was cut into a piece having a width of 3 cm and a length of 4 cm, the piece was cut with a cutter knife in a right angle lattice pattern with each square having a side of 1 mm to form a grid having 5 squares (length) × 5 squares (width), total 25 squares, a piece of tape (adhesive tape manufactured by Nichiban Co., Ltd.) was attached to the grid and peeled without a pause while the electrode fixed, and the electrode was measured for the number of squares in which coating was left without peeling from the electrode. The test was conducted 5 times and an average value was determined.

### [Evaluation for Characteristics of Produced Batteries]

In order to evaluate the characteristics of a produced coin battery, a capacity retention rate was determined by measurement of the internal resistance through charging and discharging, and a charge discharge cycle characteristic test using a charging-discharging device. Table 2 shows all the evaluation results.

### <Measurement of Internal Resistance>

A produced lithium-ion battery was charged to 4.2 V by constant-current constant-voltage charging. The end-of-charge current was equivalent to 2C. After the charging, the battery was left unoperated for 10 minutes. Subsequently, constant current discharging was conducted, and the lithium-ion battery was, from a current value I (mA) and voltage dropping ΔE (mV) after 10 seconds, measured for internal resistance R(Ω)=ΔE/I.

### <Capacity Retention Rate>

In a case of using, as a cathode active material, lithium manganate or a ternary system, the charge discharge cycle characteristics of a cathode was evaluated as electrochemical characteristics measured using a charging-discharging device manufactured by TOYO SYSTEM CO., LTD., at an upper limit of 4.2 V and a lower limit of 3.0 V under the test condition that predetermined charging and discharging can be conducted in 8 hours (C/8) for the first to third times and under energization at a constant current of 1 C for the fourth and the following times. The test was conducted in an environment of 60°C. The capacity retention rate was evaluated by the ratio between the capacity after 100 cycles and the capacity at the fourth cycle.

### <Binder Composition Synthesis Examples>

Here, synthesized acrylic latex particles were measured for the average particle diameter under the following conditions.

### (Measurement apparatus)

A particle size distribution measuring apparatus according to dynamic light scattering: Zetasizer Nano (Spectris plc.)

### (Measurement conditions)

1. A synthesized emulsion was sampled in an amount of 50 µL.
2. The sampled emulsion was diluted with 700 µL of ion exchange water three times.
3. A liquid in an amount of 2100 µL was extracted from the diluted solution.
4. Ion exchange water in an amount of 700 µL was added for dilution to 50 µL of the remaining sample, and the diluted solution was measured.

### [Binder Composition Synthesis Example 1]

Into a reaction vessel equipped with a stirrer, charged were 55.6 parts by weight of methyl methacrylate, 1.35 parts by weight of acrylic acid, 3.85 parts by weight of methacrylic acid, 3.6 parts by weight of polyethylene glycol monomethacrylate (BLEMMER PE-90 manufactured by NOF CORPORATION), 15.6 parts by weight of trimethylolpropane triacrylate (A-TMPT manufactured by Shin Nakamura Chemical Co., Ltd.), 2 parts by weight of sodium dodecyl sulfate as an emulsifier, 150 parts by weight of ion exchange water, and 0.2 parts by weight of ammonium persulfate as a polymerization initiator. The mixture was sufficiently emulsified using an ultrasonic homogenizer and then heated for polymerization at 60°C for 4 hours in a nitrogen atmosphere to synthesize a core section. Subsequently, added over 30 minutes for polymerization were 18.2 parts by weight of 2-ethylhexyl acrylate, 0.2 parts by weight of acrylic acid, 0.6 parts by weight of methacrylic acid, 0.6 parts by weight of polyethylene glycol monomethacrylate (BLEMMER PE-90 manufactured by NOF CORPORATION), and 0.4 parts by weight of trimethylolpropane triacrylate (A-TMPT manufactured by Shin Nakamura Chemical Co., Ltd.). After completing the addition, the polymerization was further carried out for 2 hours and then the polymerization liquid was cooled. After the cooling, the polymerization liquid was adjusted with a 24% aqueous solution of sodium hydroxide so as to have a pH of 2.4 to 7.1 and thus form a shell section around the core section, giving a binder A (polymerization conversion of at least 99%, solid concentration of 39 wt%). The obtained polymer had an average particle diameter of 0.182 µm.

### <Measurement of Swelling Rate>

Prepared were the resin constituting the core section, the resin constituting the shell section, and the binder A (core-shell resin) having a core-shell structure in Synthesis Example 1, and the swelling rate of each of the resins was measured by the following method. First, the resins were each dried at atmospheric pressure under the conditions of 150°C and 2 hours to remove moisture from the resins. The weight of the dried resins was made to be about 100 mg (the weight at this stage is defined as A (mg)). Next, the dried resins were immersed for 24 hours in a mixed solvent of ethylene carbonate (EC)/diethyl carbonate (DEC) = 3/7 (v/v) as a general solvent for a lithium-ion battery. Next, the resins were extracted from the mixed solvent and immersed in DEC for 10 seconds at normal temperature and normal pressure to wash EC away. Next, in order to wash DEC away, the resins were immersed in hexane for 10 seconds at normal temperature and normal pressure. Next, the resins that had been extracted from hexane were naturally dried for 5 minutes in an environment with a temperature of 25°C and a relative humidity of 50% and then measured for the weight of the resins (the weight at this stage is defined as B (mg)). The increase rate from the weight A to the weight B was defined as the swelling rate of the resins. For example, when the weight B is double the weight A, the swelling rate is 100%. As the results of the measurement, the swelling rate of the resin constituting the core section was 0.4%, the swelling rate of the resin constituting the shell section was 59.8%, and the swelling rate of the core-shell resin (binder A) was 63.2% in Synthesis Example 1.

### [Binder Composition Synthesis Example 2]

Into a reaction vessel equipped with a stirrer, charged were 40 parts by weight of methyl methacrylate, 1.1 parts by weight of acrylic acid, 3.1 parts by weight of methacrylic acid, 28.3 parts by weight of polyethylene glycol monoacrylate (BLEMMER AP-400 manufactured by NOF CORPORATION), 12.5 parts by weight of trimethylolpropane triacrylate (A-TMPT manufactured by Shin Nakamura Chemical Co., Ltd.), 2 parts by weight of sodium dodecyl sulfate as an emulsifier, 150 parts by weight of ion exchange water, and 0.2 parts by weight of ammonium persulfate as a polymerization initiator. The mixture was sufficiently emulsified using an ultrasonic homogenizer and then heated for polymerization at 60°C for 4 hours in a nitrogen atmosphere to synthesize a core section. Subsequently, added over 30 minutes for polymerization were 13.7 parts by weight of n-butyl acrylate, 0.2 parts by weight of acrylic acid, 0.4 parts by weight of methacrylic acid, 0.4 parts by weight of polyethylene glycol monomethacrylate (BLEMMER PE-90 manufactured by NOF CORPORATION), and 0.3 parts by weight of trimethylolpropane triacrylate (A-TMPT manufactured by Shin Nakamura Chemical Co., Ltd.). After completing the addition, the polymerization was further carried out for 2 hours and then the polymerization liquid was cooled. After the cooling, the polymerization liquid was adjusted with a 24% aqueous solution of sodium hydroxide so as to have a pH of 2.2 to 7.1 and thus form a shell section around the core section, giving a binder B (polymerization conversion of at least 99%, solid concentration of 39 wt%). The obtained polymer had an average particle diameter of 0.174 µm.

In the same manner as in Binder Composition Synthesis Example 1, the swelling rate was measured for the resin constituting the core section, the resin constituting the shell section, and the binder B (core-shell resin) having a core-shell structure in Synthesis Example 2. The swelling rate of the resin constituting the core section was 10% or less, the swelling rate of the resin constituting the shell section was 30% or more, and the swelling rate of the core-shell resin (binder B) was 30% or more in Synthesis Example 2.

### [Binder Composition Synthesis Example 3]

Into a reaction vessel equipped with a stirrer, charged were 30 parts by weight of methyl methacrylate, 1.0 part by weight of acrylic acid, 4.2 parts by weight of methacrylic acid, 18.2 parts by weight of butyl acrylate, 5.3 parts by weight of polyethylene glycol monomethacrylate (BLEMMER PE-90 manufactured by NOF CORPORATION), 11.3 parts by weight of trimethylolpropane triacrylate (A-TMPT manufactured by Shin Nakamura Chemical Co., Ltd.), 2 parts by weight of sodium dodecyl sulfate as an emulsifier, 150 parts by weight of ion exchange water, and 0.2 parts by weight of ammonium persulfate as a polymerization initiator. The mixture was sufficiently emulsified using an ultrasonic homogenizer and then heated for polymerization at 60°C for 4 hours in a nitrogen atmosphere to synthesize a core section. Subsequently, added over 30 minutes for polymerization were 20.7 parts by weight of n-butyl acrylate, 0.4 parts by weight of acrylic acid, 1.8 parts by weight of methacrylic acid, 2.3 parts by weight of polyethylene glycol monomethacrylate (BLEMMER PE-90 manufactured by NOF CORPORATION), and 4.8 parts by weight of trimethylolpropane triacrylate (A-TMPT manufactured by Shin Nakamura Chemical Co., Ltd.). After completing the addition, the polymerization was further carried out for 2 hours and then the polymerization liquid was cooled. After the cooling, the polymerization liquid was adjusted with a 24% aqueous solution of sodium hydroxide so as to have a pH of 2.2 to 7.1 and thus form a shell section around the core section, giving a binder C (polymerization conversion of at least 99%, solid concentration of 39 wt%). The obtained polymer had an average particle diameter of 0.195 µm.

In the same manner as in Binder Composition Synthesis Example 1, the swelling rate was measured for the resin constituting the core section, the resin constituting the shell section, and the binder C (core-shell resin) having a core-shell structure in Synthesis Example 3. The swelling rate of the resin constituting the core section was 10% or less, the swelling rate of the resin constituting the shell section was 30% or more, and the swelling rate of the core-shell resin (binder C) was 30% or more in Synthesis Example 3.

### [Binder Composition Synthesis Example 4]

Into a reaction vessel equipped with a stirrer, charged were 45.9 parts by weight of methyl methacrylate, 0.8 parts by weight of acrylic acid, 2.3 parts by weight of methacrylic acid, 11.4 parts by weight of polypropylene glycol monoacrylate (BLEMMER AP-400 manufactured by NOF CORPORATION), 9.6 parts by weight of trimethylolpropane triacrylate (A-TMPT manufactured by Shin Nakamura Chemical Co., Ltd.), 2 parts by weight of sodium dodecyl sulfate as an emulsifier, 150 parts by weight of ion exchange water, and 0.2 parts by weight of ammonium persulfate as a polymerization initiator. The mixture was sufficiently emulsified using an ultrasonic homogenizer and then heated for polymerization at 60°C for 4 hours in a nitrogen atmosphere to synthesize a core section. Subsequently, added over 30 minutes for polymerization were 19.8 parts by weight of 2-ethylhexyl acrylate, 0.5 parts by weight of acrylic acid, 1.6 parts by weight of methacrylic acid, 2.6 parts by weight of polyethylene glycol monomethacrylate (BLEMMER PE-90 manufactured by NOF CORPORATION), and 5.5 parts by weight of trimethylolpropane triacrylate (A-TMPT manufactured by Shin Nakamura Chemical Co., Ltd.). After completing the addition, the polymerization was further carried out for 2 hours and then the polymerization liquid was cooled. After the cooling, the polymerization liquid was adjusted with a 24% aqueous solution of sodium hydroxide so as to have a pH of 2.3 to 7.1 and thus form a shell section around the core section, giving a binder D (polymerization conversion of at least 99%, solid concentration of 39 wt%). The obtained polymer had an average particle diameter of 0.212 µm.

In the same manner as in Binder Composition Synthesis Example 1, the swelling rate was measured for the resin constituting the core section, the resin constituting the shell section, and the binder D (core-shell resin) having a core-shell structure in Synthesis Example 4. The swelling rate of the resin constituting the core section was 10% or less, the swelling rate of the resin constituting the shell section was 30% or more, and the swelling rate of the core-shell resin (binder D) was 30% or more in Synthesis Example 4.

### [Binder Composition Synthesis Example 5]

Into a reaction vessel equipped with a stirrer, charged were 65 parts by weight of methyl methacrylate, 1.1 parts by weight of acrylic acid, 4.6 parts by weight of methacrylic acid, 6.8 parts by weight of polyethylene glycol monomethacrylate (BLEMMER PE-90 manufactured by NOF CORPORATION), 12.5 parts by weight of trimethylolpropane triacrylate (A-TMPT manufactured by Shin Nakamura Chemical Co., Ltd.), 2 parts by weight of sodium dodecyl sulfate as an emulsifier, 150 parts by weight of ion exchange water, and 0.2 parts by weight of ammonium persulfate as a polymerization initiator. The mixture was sufficiently emulsified using an ultrasonic homogenizer and then heated for polymerization at 60°C for 4 hours in a nitrogen atmosphere to synthesize a core section. Subsequently, added over 30 minutes for polymerization were 9.2 parts by weight of 2-ethylhexyl acrylate, 0.1 parts by weight of acrylic acid, 0.3 parts by weight of methacrylic acid, 0.3 parts by weight of polyethylene glycol monomethacrylate (BLEMMER PE-90 manufactured by NOF CORPORATION), and 0.1 parts by weight of trimethylolpropane triacrylate (A-TMPT manufactured by Shin Nakamura Chemical Co., Ltd.). After completing the addition, the polymerization was further carried out for 2 hours and then the polymerization liquid was cooled. After the cooling, the polymerization liquid was adjusted with a 24% aqueous solution of sodium hydroxide so as to have a pH of 2.2 to 7.1 and thus form a shell section around the core section, giving a binder E (polymerization conversion of at least 99%, solid concentration of 39 wt%). The obtained polymer had an average particle diameter of 0.195 µm.

In the same manner as in Binder Composition Synthesis Example 1, the swelling rate was measured for the resin constituting the core section, the resin constituting the shell section, and the binder E (core-shell resin) having a core-shell structure in Synthesis Example 5. The swelling rate of the resin constituting the core section was 10% or less, the swelling rate of the resin constituting the shell section was 30% or more, and the swelling rate of the core-shell resin (binder E) was 30% or more in Synthesis Example 5.

### [Binder Composition Synthesis Example 6]

Into a reaction vessel equipped with a stirrer, charged were 60.5 parts by weight of methyl methacrylate, 1.3 parts by weight of acrylic acid, 2.9 parts by weight of methacrylic acid, 10.3 parts by weight of trimethylolpropane triacrylate (A-TMPT manufactured by Shin Nakamura Chemical Co., Ltd.), 2 parts by weight of sodium dodecyl sulfate as an emulsifier, 150 parts by weight of ion exchange water, and 0.2 parts by weight of ammonium persulfate as a polymerization initiator. The mixture was sufficiently emulsified using an ultrasonic homogenizer and then heated for polymerization at 60°C for 4 hours in a nitrogen atmosphere to synthesize a core section. Subsequently, added over 30 minutes for polymerization were 19.6 parts by weight of 2-ethylhexyl acrylate, 0.3 parts by weight of acrylic acid, 0.8 parts by weight of methacrylic acid, 1.1 parts by weight of polyethylene glycol monomethacrylate (BLEMMER PE-90 manufactured by NOF CORPORATION), and 3.2 parts by weight of trimethylolpropane triacrylate (A-TMPT manufactured by Shin Nakamura Chemical Co., Ltd.). After completing the addition, the polymerization was further carried out for 2 hours and then the polymerization liquid was cooled. After the cooling, the polymerization liquid was adjusted with a 24% aqueous solution of sodium hydroxide so as to have a pH of 2.3 to 7.1 and thus form a shell section around the core section, giving a binder F (polymerization conversion of at least 99%, solid concentration of 40 wt%). The obtained polymer had an average particle diameter of 0.201 µm.

In the same manner as in Binder Composition Synthesis Example 1, the swelling rate was measured for the resin constituting the core section, the resin constituting the shell section, and the binder F (core-shell resin) having a core-shell structure in Synthesis Example 6. The swelling rate of the resin constituting the core section was 10% or less, the swelling rate of the resin constituting the shell section was 30% or more, and the swelling rate of the core-shell resin (binder F) was 30% or more in Synthesis Example 6.

### [Binder Composition Comparative Synthesis Example 1]

Into a reaction vessel equipped with a stirrer, charged were 80 parts by weight of methyl methacrylate, 3 parts by weight of acrylic acid, 5 parts by weight of methacrylic acid, 12 parts by weight of trimethylolpropane triacrylate (A-TMPT manufactured by Shin Nakamura Chemical Co., Ltd.), 1 part by weight of sodium dodecylbenzenesulfonate as an emulsifier, 150 parts by weight of ion exchange water, and 0.2 parts by weight of ammonium persulfate as a polymerization initiator. The mixture was sufficiently emulsified using a homogenizer, then heated for polymerization at 60°C for 5 hours in a nitrogen atmosphere, and then cooled. After the cooling, the polymerization liquid was adjusted with a 24% aqueous solution of sodium hydroxide so as to have a pH of 7.1 and thus give a binder G (polymerization conversion of at least 99%) (solid concentration of 38 wt%). The obtained polymer had an average particle diameter of 0.134 µm.

### [Binder Composition Comparative Synthesis Example 2]

Into a reaction vessel equipped with a stirrer, charged were 33 parts by weight of methyl methacrylate, 60 parts by weight of polyethylene glycol monoacrylate (BLEMMER AE-400 manufactured by NOF CORPORATION), 7 parts by weight of acrylic acid, 1 part by weight of sodium dodecylbenzenesulfonate as an emulsifier, 150 parts by weight of ion exchange water, and 0.2 parts by weight of potassium persulfate as a polymerization initiator. The mixture was sufficiently emulsified using a homogenizer, then heated for polymerization at 60°C for 5 hours in a nitrogen atmosphere, and then cooled. After the cooling, the polymerization liquid was adjusted with a 24% aqueous solution of sodium hydroxide so as to have a pH of 7.1 and thus give a binder H (polymerization conversion of at least 99%) (solid concentration of 38 wt%). The obtained polymer had an average particle diameter of 0.153 µm.

### <Electrode Production Examples>

### [Electrode Production Example 1]

To 95 parts by weight of spinel-type lithium manganate as a cathode active material, added were 3 parts by weight of acetylene black as an electrically conductive additive and 2 parts by weight (solid content) of the binder A obtained in Binder Composition Synthesis Example 1. Further, water was added to the mixture so that the solid concentration of a cathode slurry became 55% by weight, and the mixture was sufficiently mixed using a planetary mill to give the cathode slurry.

The obtained cathode slurry was applied onto a 20-µm-thick aluminum current collector using a baker-type applicator with a gap of 100 µm, dried under vacuum at 110°C for at least 12 hours, and then pressed with a roller press machine to produce a cathode having a thickness of 32 µm. Table 1 shows as Example 1 the evaluation results of the bendability test and the bondability test.

### [Electrode Production Example 2]

A cathode was produced in the same manner as in Electrode Production Example 1 except for using the binder B obtained in Binder Composition Synthesis Example 2. The obtained cathode had a thickness of 33 µm. Table 1 shows as Example 2 the evaluation results of the bendability test and the bondability test.

### [Electrode Production Example 3]

A cathode was produced in the same manner as in Electrode Production Example 1 except for using the binder C obtained in Binder Composition Synthesis Example 3. The obtained cathode had a thickness of 33 µm. Table 1 shows as Example 2 the evaluation results of the bendability test and the bondability test.

### [Electrode Production Example 4]

A cathode was produced in the same manner as in Electrode Production Example 1 except for using the binder D obtained in Binder Composition Synthesis Example 4. The obtained cathode had a thickness of 33 µm. Table 1 shows as Example 2 the evaluation results of the bendability test and the bondability test.

### [Electrode Production Example 5]

A cathode was produced in the same manner as in Electrode Production Example 1 except for using the binder E obtained in Binder Composition Synthesis Example 5. The obtained cathode had a thickness of 33 µm. Table 1 shows as Example 2 the evaluation results of the bendability test and the bondability test.

### [Electrode Production Example 6]

A cathode was produced in the same manner as in Electrode Production Example 1 except for using the binder F obtained in Binder Composition Synthesis Example 6. The obtained cathode had a thickness of 33 µm. Table 1 shows as Example 2 the evaluation results of the bendability test and the bondability test.

### [Electrode Comparative Production Example 1]

A cathode was produced in the same manner as in Electrode Production Example 1 except for using the binder G obtained in Binder Composition Comparative Synthesis Example 1. The obtained cathode had a thickness of 35 µm. Table 1 shows as Comparative Example 1 the evaluation results of the bendability test and the bondability test.

### [Electrode Comparative Production Example 2]

A cathode was produced in the same manner as in Electrode Production Example 1 except for using the binder H obtained in Binder Composition Comparative Synthesis Example 2. The obtained cathode had a thickness of 36 µm. Table 1 shows as Comparative Example 2 the evaluation results of the bendability test and the bondability test.

Table 1 shows the evaluation results for the physical properties of the electrodes according to the examples and the comparative examples.

**[Table 1]**

| | Electrode bendability | Electrode bondability |
|---|---|---|
| Example 1 | ○ | 25/25 |
| Example 2 | ○ | 25/25 |
| Example 3 | ○ | 25/25 |
| Example 4 | ○ | 25/25 |
| Example 5 | ○ | 25/25 |
| Example 6 | ○ | 25/25 |
| Comparative example 1 | × | 5/25 |
| Comparative example 2 | × | 10/25 |

### <Battery Manufacturing Examples>

### [Coin Battery Manufacturing Example 1]

In a glove box the atmosphere in which was substituted with an argon gas, a laminate was sufficiently impregnated with a 1 mol/L electrolyte solution of lithium hexafluorophosphate in ethylene carbonate, ethyl methyl carbonate, and diethyl carbonate (volume ratio 3 : 5: 2), followed by caulking, the laminate being prepared by bonding the cathode obtained in Electrode Production Example 1, two 18-µm-thick porous films of polypropylene/polyethylene/polypropylene as a separator, and a 300-µm-thick lithium metal foil as a counter electrode. Thus, a 2032-type coin battery for tests was manufactured. Table 2 shows as Example 1 the evaluation results of the internal resistance measurement and the capacity retention rate after 100 cycles.

### [Coin Battery Manufacturing Example 2]

A coin battery was produced in the same manner as in Electrode Production Example 1 except for using the cathode obtained in Electrode Production Example 2. Table 2 shows as Example 2 the evaluation results of the internal resistance measurement and the capacity retention rate after 100 cycles.

### [Coin Battery Manufacturing Example 3]

A coin battery was produced in the same manner as in Electrode Production Example 1 except for using the cathode obtained in Electrode Production Example 3. Table 2 shows as Example 3 the evaluation results of the internal resistance measurement and the capacity retention rate after 100 cycles.

### [Coin Battery Manufacturing Example 4]

A coin battery was produced in the same manner as in Electrode Production Example 1 except for using the cathode obtained in Electrode Production Example 4. Table 2 shows as Example 4 the evaluation results of the internal resistance measurement and the capacity retention rate after 100 cycles.

### [Coin Battery Manufacturing Example 5]

A coin battery was produced in the same manner as in Electrode Production Example 1 except for using the cathode obtained in Electrode Production Example 5. Table 2 shows as Example 5 the evaluation results of the internal resistance measurement and the capacity retention rate after 100 cycles.

### [Coin Battery Manufacturing Example 6]

A coin battery was produced in the same manner as in Electrode Production Example 1 except for using the cathode obtained in Electrode Production Example 6. Table 2 shows as Example 6 the evaluation results of the internal resistance measurement and the capacity retention rate after 100 cycles.

### [Coin Battery Comparative Manufacturing Example 1]

A coin battery was produced in the same manner as in Electrode Production Example 1 except for using the cathode obtained in Electrode Comparative Production Example 1. Table 2 shows as Comparative Example 1 the evaluation results of the internal resistance measurement and the capacity retention rate after 100 cycles.

### [Coin Battery Comparative Manufacturing Example 2]

A coin battery was produced in the same manner as in Electrode Production Example 1 except for using the cathode obtained in Electrode Comparative Production Example 2. Table 2 shows as Comparative Example 2 the evaluation results of the internal resistance measurement and the capacity retention rate after 100 cycles.

Table 2 shows the evaluation results for the characteristics of the batteries according to the examples and the comparative examples.

**[Table 2]**

| | Internal resistance (Ω) | Capacity retention rate (%) after 100 cycles (25°C) |
|---|---|---|
| Example 1 | 11.1 | 96 |
| Example 2 | 10.9 | 97 |
| Example 3 | 11.4 | 95 |
| Example 4 | 11.2 | 96 |
| Example 5 | 10.8 | 97 |
| Example 6 | 11.0 | 96 |
| Comparative example 1 | 12.9 | 85 |
| Comparative example 2 | 13.1 | 82 |

The lithium-ion batteries of Examples 1 to 6 that each include the cathode according to the present invention are more excellent in adhesiveness than the lithium-ion batteries of Comparative Examples 1 and 2. In addition, the coin batteries of Examples 1 to 6 are lower in internal resistance than the coin batteries of Comparative Examples 1 and 2. As a result, it was demonstrated that the coin batteries of Examples 1 to 6 are remarkably excellent also in capacity retention rate after 100 cycles.

### INDUSTRIAL APPLICABILITY

A battery electrode binder according to the present invention is excellent in bondability and capable of effectively decreasing the internal resistance of a battery while still being usable as an aqueous binder with low environmental burden. Further, a battery according to the present invention manufactured using the battery electrode binder is suitably applicable for use ranging from small-scale batteries for electronic apparatuses such as a mobile phone, a laptop computer, and a camcorder, to large-scale secondary batteries for use in vehicles such as an electric vehicle and a hybrid electric vehicle and for use as home power storage batteries.

## Claims

1. A battery electrode binder comprising a core-shell structure that includes a core section (A) and a shell section (B), with the core section (A) containing a copolymer that has methyl methacrylate as a main component and the shell section (B) having a (meth)acrylate-based copolymer that contains a (meth)acrylate as a polymerization component,
a resin constituting the core section (A) and a resin constituting the shell section (B) having swelling rates of 10% or less and 30% or more, respectively, with respect to a mixed solvent having ethylene carbonate and diethyl carbonate mixed therein at a volume ratio of 3 : 7.

2. The battery electrode binder according to claim 1, wherein the (meth)acrylate-based copolymer of the shell section (B) contains a polyfunctional (meth)acrylate monomer as the polymerization component.

3. The battery electrode binder according to claim 1 or 2, comprising between the core section (A) and the shell section (B) a portion where the core section (A) is compatible with the shell section (B).

4. The battery electrode binder according to any one of claims 1 to 3, wherein the (meth)acrylate-based copolymer of the shell section (B) contains a hydroxy group-containing (meth)acrylic monomer as the polymerization component.

5. The battery electrode binder according to any one of claims 2 to 4, wherein the polyfunctional (meth)acrylate monomer is a di- to penta-functional (meth)acrylate.

6. The battery electrode binder according to any one of claims 1 to 5, wherein the (meth)acrylate in the (meth)acrylate-based copolymer of the shell section (B) is at least one selected from the group consisting of ethyl acrylate, propyl acrylate, butyl acrylate, 2-ethylhexyl acrylate, and 2-ethylhexyl methacrylate.

7. The battery electrode binder according to claim 4, wherein the hydroxy group-containing (meth)acrylate monomer is an alkylene glycol mono(meth)acrylate.

8. The battery electrode binder according to any one of claims 1 to 7, being an aqueous emulsion having a particle diameter of 50 to 300 nm.

9. A battery electrode comprising a current collector and on the current collector a composition containing at least an electrode active material, an electrically conductive additive, and a binder,
the binder being the battery electrode binder according to any one of claims 1 to 8.

10. The battery electrode according to claim 9, having a content of the electrically conductive additive of 1 to 20 parts by weight and a content of the binder of 1 to 10 parts by weight, based on 100 parts by weight of the electrode active material.

11. A method of manufacturing a battery electrode, the method comprising the steps of:
dispersing an electrode active material and an electrically conductive additive in an aqueous solvent to give a dispersion;
further dispersing in the dispersion an aqueous binder containing the battery electrode binder according to any one of claims 1 to 8 to give a slurry solution; and
applying the obtained slurry solution onto a current collector and drying the slurry solution.

12. A battery comprising the battery electrode according to claim 9 or 10.
